# EUROPÄISCHE PATENTSCHRIFT

(11) **EP 0 534 169 B1**
(45) Veröffentlichungstag und Bekanntmachung des Hinweises auf die Patenterteilung: **20.07.1994**
(21) Anmeldenummer: 92114821.9
(22) Anmeldetag: 29.08.1992
(51) Int. Cl.: B63B 1/04, B63B 1/08

(54) **Schiff**
Ship
Bateau

(30) Priorität: 21.09.1991 DE 4131464; 12.02.1992 DE 4204110
(43) Veröffentlichungstag der Anmeldung: 31.03.1993
(73) Patentinhaber: Jägers, Leopold, D-53879 Euskirchen (DE)
(72) Erfinder: Jägers, Leopold, D-53879 Euskirchen (DE)
(74) Vertreter: COHAUSZ HASE DAWIDOWICZ & PARTNER

(56) Entgegenhaltungen:
- EP-A- 0 298 051
- DE-B- 1 112 421
- DE-U- 8 119 179
- DE-U- 9 000 582
- FR-A- 2 408 506
- FR-A- 2 579 166
- US-A- 3 677 212
- US-A- 3 937 164

## Beschreibung

Der Ablösungswiderstand am Heck eines Schiffes, der identisch ist mit der Sogwirkung, wird von den meisten Fachleuten mit ca. der Hälfte Leistungsbedarfs angegeben.

Aufgabe der Erfindung ist es, ein Schiff zu bauen, das am Heck einen möglichst geringen Sog erzeugt und es darüberhinaus möglich ist, die Antriebseinheiten optimal zu plazieren.

Diese Aufgabe wird erfindungsgemäß durch die Merkmale des Anspruchs 1 gelöst. Der Ablösungswiderstand ist hierdurch sehr klein, so daß ein großer Teil des Kraftstoffes eingespart werden kann.

Die Erfindung konzentriert sich darum auf die Auswirkungen der Schiffsform und den dabei benötigten Energiebedarf. Die Formgebung gemäß der Erfindung im Heckbereich eines Schiffes verringert wesentlich den Ablösungswiderstand und den Sog des Propellers und läßt damit einen wirtschaftlicheren Betrieb verdrängender Schiffe zu.

Die Veränderung gemäß der Erfindung besteht darin, daß der insbesondere rechteckige Rumpfquerschnitt spätestens ab der Schiffsmitte unterhalb der Wasserlinie im wesentlichen bis zum Schiffsende, also dem Heck, beibehalten wird. Die stromlinienförmige Verjüngung im hinteren Drittel der Schiffsform entfällt.

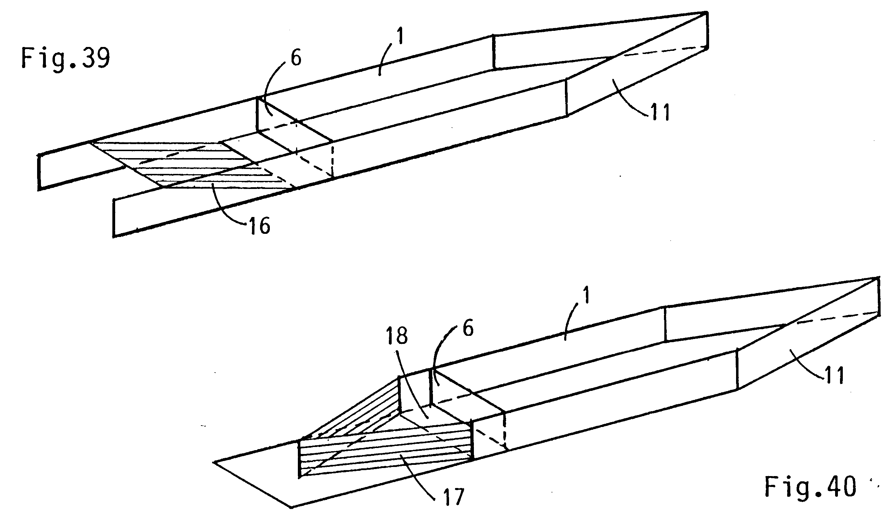

Bis ca. 10 km/h Fahrtgeschwindigkeit fließt das Wasser am Heck mit Verwirbelungen nach. Bei höheren Geschwindigkeiten bildet sich hinter dem Heck im Wasser eine Rinne von etwa der Breite des Rumpfes aus (Fig. 38), über deren zwei Seitenwände das Wasser von den zwei Seiten her in den Raum der Rinne hineinstürzt.

Das Verhältnis der Länge des Bodens zu den Seitenwänden und das Verhältnis der Seitenwände zur Heckfläche ist naturgemäß abhängig vom jeweiligen Betriebszustand, z.B. Tiefgang, Geschwindigkeit, Wellenhöhe usw...

Bei entsprechender Ausführung der Seitenwände und des Bodens entfällt also das sogenannte Nachlaufen des hinter dem Schiffsrumpf befindlichen Wassers, weil der durch die Fahrt entstehende Freiraum durch die hinter dem Schiff mitgeführte Luft ausgefüllt wird.
Um eine Sogwirkung, d.h. ein Nachlaufen des Wassers zu vermeiden, ist gemäß der Erfindung ein abruptes Beenden des Schiffsrumpfes erforderlich. Nur so kann der Freiraum, der sich bei entsprechend hoher Fahrt hinter dem Heck bildet, mit Luft aufgefüllt werden. Es ist bekannt, daß Luft ca. 1000mal leichter ist als Wasser. Außerdem ist Luft flexibel, da sie komprimierbar ist. Folglich ist der Sog entsprechend klein und kann vernachlässigt werden.

Das ist der Grund, die Propulsion aus dem bisherigen Rumpfschatten, welcher der größte Querschnitt des Schiffsrumpfes unterhalb der Wasserlinie ist oder die Projektion dieses Querschnittes auf die Ebene, die senkrecht zur Schiffslängsachse steht, zu entfernen und diese im direkt angeströmten Freiraum zu plazieren. Gemäß der Erfindung befindet sich die Propulsion außerhalb des Rumpfschattens.

Normalerweise kann die Propulsion wegen möglicher Beschädigungen nicht direkt unter dem Schiff angeordnet werden. Bei unterschiedlichen Wassertiefen, z.B. Flachwasser, ist es notwendig, daß die Propulsion nie tiefer liegt als der tiefste Punkt des Schiffbodens.

Aus diesem Grund besitzt ein Schiff gemäß einer Zweckmäßigen Ausgestaltung der Erfindung ein Unterwasserschiff, das sich aus einer oder mehreren Stufen zusammensetzt.

Die geradflächigen Stufen erstrecken sich über die ganze Schiffslänge. Das Unterwasserschiff endet mit einer senkrechten Heckabschlußplatte.

Durch die Vorwärtsbewegung des Schiffskörpers und damit auch des Schiffsbodens in Fahrt herrscht fortlaufend der gleiche Auftrieb wie bei einem Schiffskörper, der sich in Ruhe befindet. Primär entsteht bei der Vorwärtsbewegung auf der gesamten Stirnseite des Schiffes ein Druck, welcher direkt von der Größe der Querverdrängung (QV = B x T) abhängt. Diese Querverdrängung muß von dem keilförmigen Vorschiff im wahrsten Sinne des Wortes zerteilt und beseitigt werden. Bei hohen Geschwindigkeiten, z.B. 50 km/h und darüber, entsteht im Frontbereich, d.h. an den beiden Seitenflächen des Keils, ein Wasserstau, der bei Schiffen bisheriger Bauart eine enorme Erhöhung der Wasseroberfläche bewirkt, welche die Bildung von Eigenwellen einleitet.

Bei einem Schiff gemäß der Erfindung wird der Frontwiderstand durch eine oder mehrere Keileinheiten überwunden, wobei der größten Wassertiefe stets der kleinste Keilwinkel zugeordnet ist. Die Antriebselemente, bestehend aus Propeller oder Turbinenpropeller, sind problemlos in den Ausnehmungen angeordnet, die durch die einzelnen Stufen gebildet werden. Es erfolgt in jedem Fall eine direkte Anströmung der Antriebseinheiten. Desweiteren besitzt ein Schiff gemäß der Erfindung eine oder mehrere Antriebseinheiten, welche um einen Radius in der Höhe schwenkbar sind und dadurch den unterschiedlichen Aufgaben angepaßt werden können.

Eigenwellen im Bugbereich können bei einem Schiff gemäß der Erfindung mit einem Antrieb im Frontbereich verhindert werden. Durch eine Abdeckung der Keilseiten durch die Auskragung des Oberschiffes wird eine Art Rinne gebildet, in der die antreffende Strömung etwas beschleunigt wird. Wenn diese Strömung an der entsprechenden Stelle vom Antrieb erfaßt wird, bildet sich eine harte Wassersäule, die an der Seite des Keils anliegt und oben von der Auskragung begrenzt wird.

Gemäß der Erfindung befindet sich der Antrieb in der vorderen Hälfte der Keillänge. Die nachfolgende Hälfte der Anströmung trifft auf die Wassersäule und wird von ihr mitgerissen, d.h. beschleunigt. Die Wassersäule kann nach hinten nicht ausweichen, weil sie von der Keilfläche abgestützt wird. Die gesamte Verdrängung wird also gezwungen, seitlich nach hinten auszuweichen. Die Wassermenge der Querverdrängung wird also schräg nach hinten außerhalb der Fahrrinne bewegt. Hierdurch wird das durch die Fahrt anströmende Wasser in der ersten Hälfte des Keiles weggesaugt, es entsteht dort eine Mulde in der Wasseroberfläche. Das Wasser, welches schräg nach hinten transportiert wird, bildet dort neben dem Schiff eine Erhöhung in der Wasseroberfläche. Diese Erhöhung ergibt naturgemäß einen größeren Auftrieb. Die Wassermulde im Bugbereich und die Wassererhöhung im Heckbereich wirken sich auf die notwendige Antriebsleistung äußerst positiv aus. Es tritt ein "Talfahrt-Effekt" auf.

Es liegt an der Leistungsfähigkeit des Antriebes, ob sich wenig oder gar keine Antriebswellen bilden können. Ist z.B. der Antrieb groß und stark genug und die Schiffsbreite entsprechend, so ist es kein Problem, das ganze angeströmte Wasser zu beseitigen. Die Effektivität der Beseitigung entspricht also dem Gewinn an Wirtschaftlichkeit beim Frontwiderstand.

Ausführungsbeispiele der Erfindung sind in den Zeichnungen dargestellt und werden im folgenden näher beschrieben. Es zeigen:
- Fig. 1: Seitenansicht eines Schiffes mit einer Stufe je Seite über der gesamten Länge im Unterwasserbereich,
- Fig. 2: Vorderansicht von Figur 1,
- Fig. 3: Draufsicht von Figur 1,
- Fig. 4: Seitenansicht eines Schiffes mit 2 Stufen je Seite über der gesamten Länge im Unterwasserbereich,
- Fig. 5: Vorderansicht von Figur 4,
- Fig. 6: Draufsicht von Figur 4,
- Fig. 7: Senkrechter schlanker Keil vor dem Eintauchen in eine Wasseroberfläche,
- Fig. 8: Senkrechter Keil teilweise eingetaucht,
- Fig. 9: Senkrechter Keil vollständig eingetaucht,
- Fig. 10: Seitenansicht eines Schiffes mit keilförmigem Vorderschiff,
- Fig. 11: Vorderansicht von Fig. 11,
- Fig. 12: Draufsicht von Figur 10,
- Fig. 13: Seitenansicht eines Schiffes mit dem Effekt "Talfahrt",
- Fig. 14: Seitenansicht eines Schiffes mit Antriebsschwinge am Hinterschiff, Stellung "Tiefwasser"
- Fig. 15: Vorderansicht von Fig. 14,
- Fig. 16: Draufsicht von Fig. 14,
- Fig. 17: Seitenansicht eines Schiffes, Antriebsschwinge in Position "Flachwasser",
- Fig. 18: Vorderansicht von Fig. 17,
- Fig. 19: Draufsicht von Fig. 17,
- Fig. 20: Seitenansicht eines Schiffes mit Antriebseinheit am Vorderschiff,
- Fig. 21: Vorderansicht von Fig. 20,
- Fig. 22: Draufsicht von Fig. 20,
- Fig. 23: Seitenansicht eines Schiffes mit Antriebseinheiten am Vorder- und am Hinterschiff, Antriebseinheit am Hinterschiff in Stellung "Tiefwasser",
- Fig. 24: Vorderansicht von Fig. 23,
- Fig. 25: Draufsicht von Fig. 23,
- Fig. 26: Schnitt in Höhe der Antriebseinheit am Vorderschiff gemäß Fig. 25,
- Fig. 27: Heckansicht eines Schiffes gemäß Fig. 14, Antriebseinheit in Stellung "Tiefwasser",
- Fig. 28: Seitenansicht des Hinterschiffbereiches, Fig. 27,
- Fig. 29: Heckansicht eines Schiffes gemäß Fig. 14, Antriebseinheit in Position "Flachwasser",
- Fig. 30: Seitenansicht nach Fig. 29,
- Fig. 31: Heckansicht bei oberer Stellung der Antriebseinheit,
- Fig. 32: Seitenansicht nach Fig. 31,
- Fig. 33: Teil der Heckansicht eines Schiffes aus Fig. 19 mit einer Antriebseinheit, Stellung der Schwinge für die Bereiche "Tiefwasser" und "Inspektion-Wartung-Segeln",
- Fig. 34: Seitenansicht des Hinterschiffbereiches, Fig. 33, Teilschnitt, Haupt- und Nebenaggregate,
- Fig. 35: Seitenansicht eines Schiffes in Ruhe,
- Fig. 36: Draufsicht eines Schiffes in Ruhe,
- Fig. 37: Seitenansicht eines Schiffes bei einer Geschwindigkeit von ca. 10-20 km/h entsprechend ca. 3-6 m/s,
- Fig. 38: Draufsicht eines Schiffes bei einer Geschwindigkeit von ca. 10-20 km/h entsprechend ca. 3-6 m/s,
- Fig. 39: schematische Darstellung der Auftriebskräfte am Heck bei einem Schiff in Bewegung,
- Fig. 40: schematische Darstellung der Seitenkräfte am Heck bei einem Schiff in Bewegung.

Alle Typen von Schiffen lassen sich gemäß der Erfindung bauen:

Der Rumpf 1 des Schiffes mit seiner Längsachse L weist zwei senkrechte Seitenflächen 1a, 1b und einen waagerechten Boden 1c auf, die sich über mehr als die Hälfte der Schiffslänge parallel zur Längsachse L erstrecken und eben (ungekrümmt) sind. Der Boden 1c ist in allen Ausführungsbeispielen über die gesamte Schiffslänge waagerecht und eben und somit parallel zur Längsachse L. Die senkrechte ebene Heckabschlußplatte 6 steht normal zur Längsachse L. Die zwei Seitenflächen 1a, 1b und der Boden 1c überragen die Platte 6 so weit, daß sichergestellt ist, daß bei Fahrt die Platte 6 von Wasser frei bleibt.

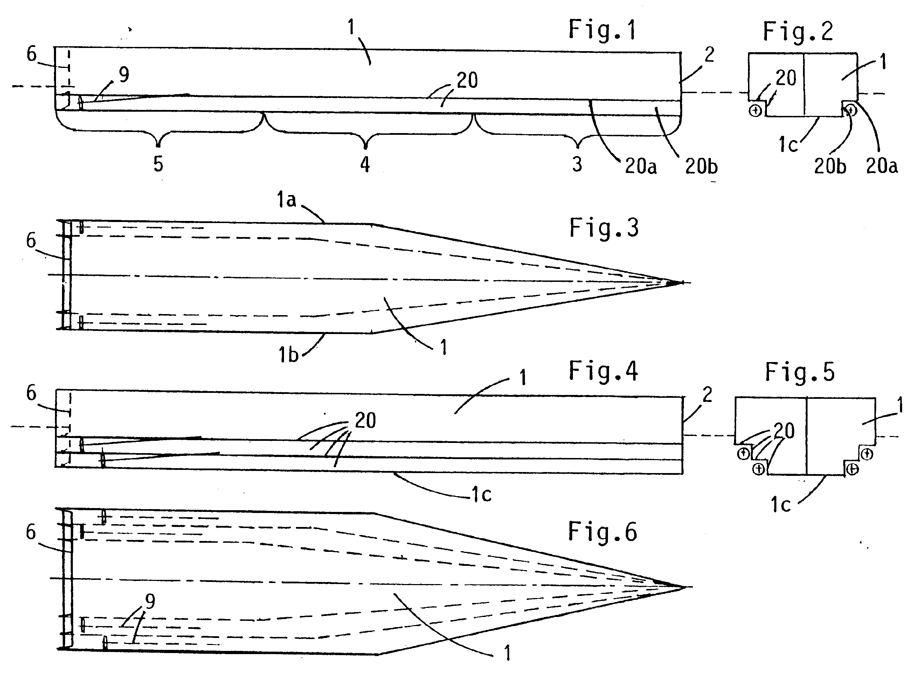

Schiffe mit einer oder mehreren Stufen 20 im Unterwasserbereich, die sich über die gesamte Schiffslänge erstrecken, Figur 1 bis 6. Die Stufen sind so ausgebildet, daß sie im Bugbereich mit einem Keilwinkel beginnen. Der größten Wassertiefe ist zwecks leichterer Überwindung des Frontwiderstandes der kleinste Keilwinkel zugeordnet. Die Stufen 20 werden durch gerade Flächen 20a, 20b gebildet, von denen eine senkrecht und eine waagerecht liegt.

Die Antriebseinheiten, es können z.B. Propeller oder Turbinenpropeller eingesetzt werden, lassen sich vorzugsweise in den Ausnehmungen plazieren, die durch die einzelnen Stufen gebildet werden. Dabei ist eine bestimmte Position bezüglich der Schiffslängsachse nicht zwingend notwendig. Die Antriebseinheiten liegen stets außerhalb des Rumpfschattens und werden immer direkt angeströmt.

Ein nach den Figuren 4 bis 6 gebautes Schiff wird wegen der senkrechten Heckabschlußplatte im Unterwasserbereich einen minimalen Ablösungswiderstand und wegen der stufenweisen Querverdrängung im Bugbereich einen minimalen Frontwiderstand besitzen. Das sind die wichtigsten Voraussetzungen für einen wirtschaftlicheren Betrieb als bisher oder alternativ für bisher nicht erreichte Geschwindigkeiten.

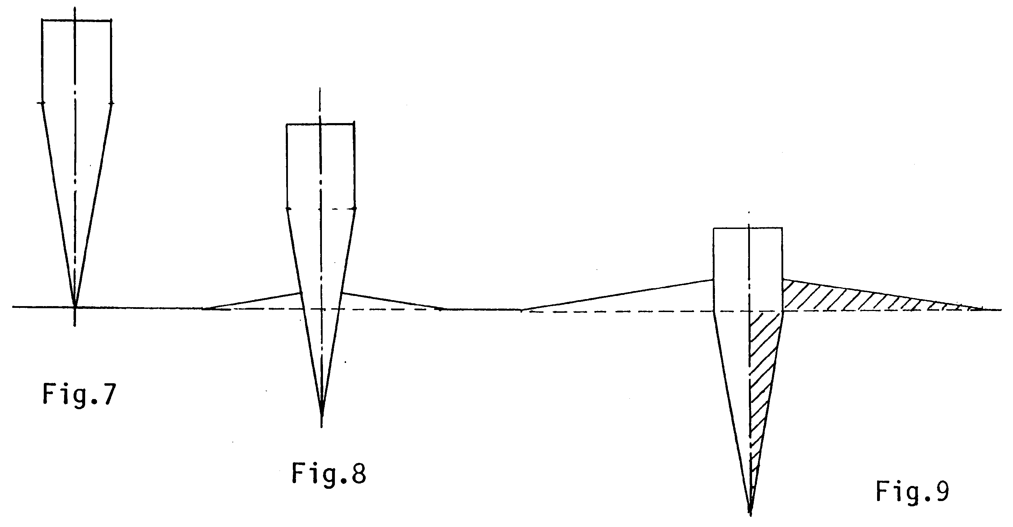

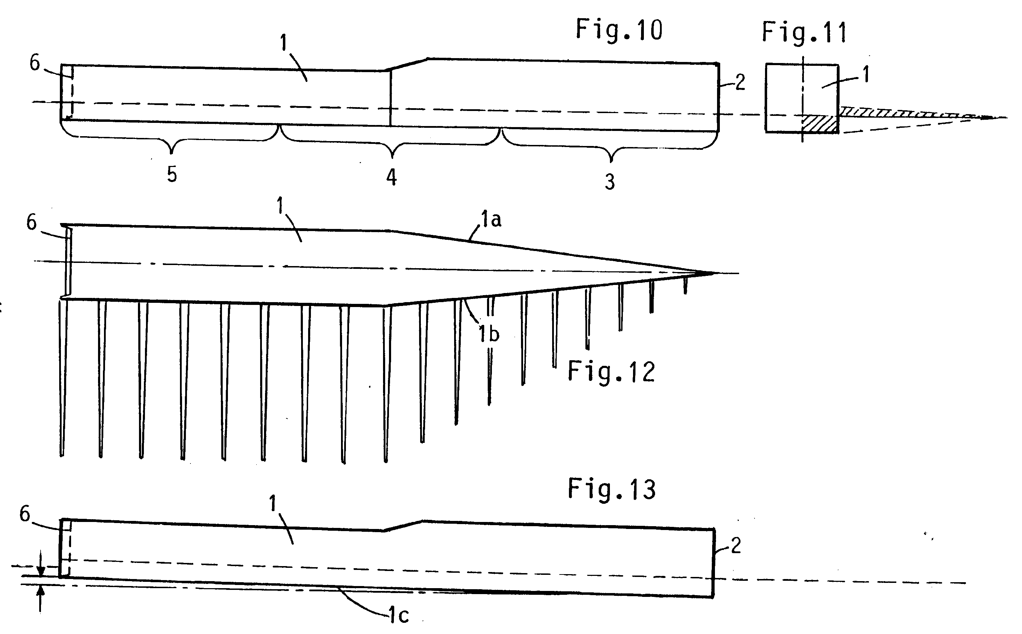

Zum besseren Verständnis der Querverdrängung ist in den Figuren 7 bis 9 das senkrechte Eintauchen eines schlanken Keils in eine Wasseroberfläche in 3 Abschnitten wiedergegeben. Es ist leicht einzusehen, daß die schraffierten Flächen der Figur 9 identisch sind. Aufbauend auf dieser Erkenntnis zeigen die Figuren 10 und 11 die Querverdrängung, die von einem geometrisch exakten Keil verursacht wird. Die Wege, die das Wasser bei konstanter Geschwindigkeit zurücklegt, sind in Figur 12 wiedergegeben.

Abhängig von der Schiffsgeschwindigkeit macht sich das vom Bugkeil verdrängte Wasser in einer mehr oder weniger starken Erhöhung des Wasserspiegels längs des gesamten Schiffsrumpfes bemerkbar und bewirkt dort einen erhöhten Auftrieb. Das Ergebnis ist, daß das Schiff effektiv gleichsam "zu Tal" fährt, siehe Figur 13. Die Eigenwellenbildung, ein bisher gravierender Stör- und Widerstandsfaktor, wird außerdem durch die hier beschriebenen Maßnahmen auf ein Minimum reduziert.

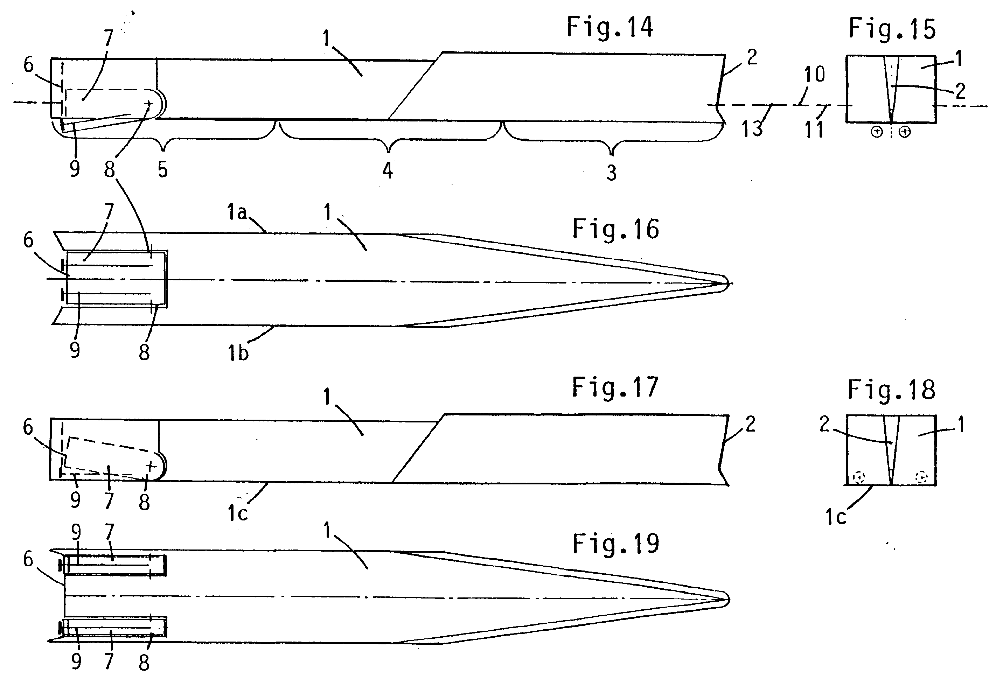

Schiffe mit schwenkbarer Antriebseinheit am Heck (Fig. 14 bis 19). Diese Anordnung der Propulsion eignet sich besonders für Schiffe mit herkömmlichen Aufgaben und Geschwindigkeiten.

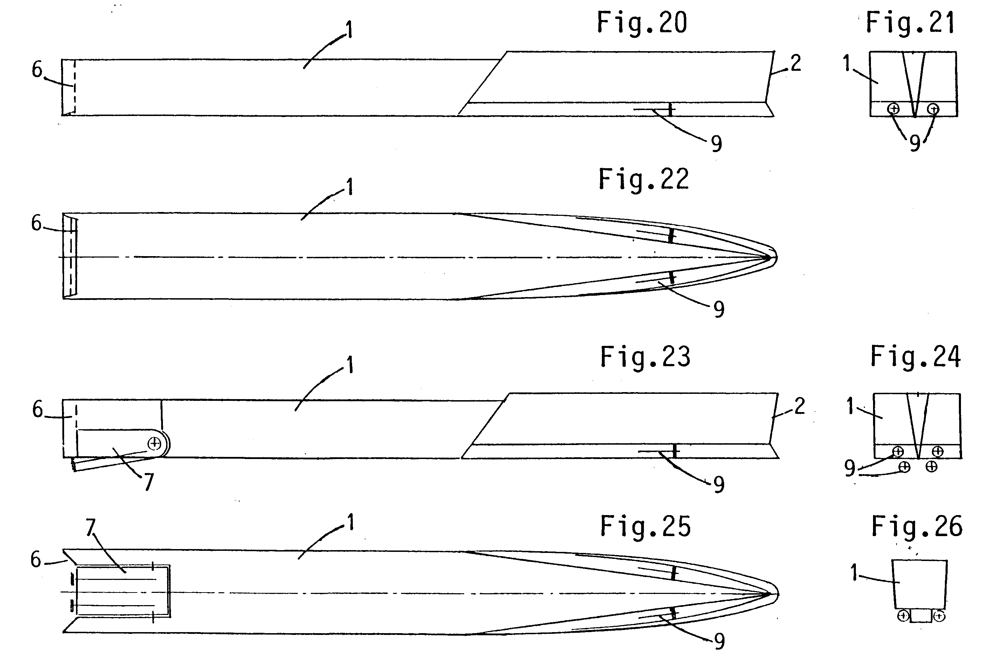

Schiff mit Antrieb unter dem Vorschiff (Fig. 20 bis 22). Bei dieser neuartigen Anordnung der Antriebseinheiten läßt sich gegenüber den Schiffstypen gemäß Fig. 14-19 eine noch höhere Kraftstoffeinsparung verwirklichen.

Schiff mit Antriebseinheiten sowohl unter dem Vorschiff als auch unter dem Hinterschiff (Fig. 23 bis 26). Mit diesem Schiffstyp lassen sich im Gegensatz zu herkömmlichen Schiffen bei gleichem Kraftstoffverbrauch wesentlich höhere Geschwindigkeiten erreichen. Diese Geschwindigkeitssteigerungen liegen wesentlich höher als bei heutigen Schiffen üblich.

Die Fig. 14 zeigt in einem ersten Ausführungsbeispiel die Seitenansicht eines Schiffskörpers (Rumpf) 1 mit Bug 2, Vorderschiff 3, Mittelschiff 4, Hinterschiff 5 und senkrechter Heckabschlußplatte 6. Im Bereich des Hinterschiffes 5 befindet sich eine Antriebseinheit 7, die mit einem über einen Drehpunkt gelagerten verstellbaren Gehäuse als Schwinge 8 ausgeführt ist. Fig. 15 gibt die Vorderansicht von Fig. 14 wieder mit dem Bug 2.

Die Draufsicht nach Fig. 16 zeigt, daß die Schwinge 8 mit zwei Propulsionseinheiten 9 ausgerüstet ist, in der Stellung für einen Betrieb in Tiefwasser. Die Propulsion befindet sich unterhalb des Rumpfschattens und wird damit frei angeströmt. Unter "Rumpfschatten" wird der größte senkrechte Querschnitt des Rumpfes unterhalb der Wasserlinie verstanden. Er ist die Projektion dieses Querschnitts auf die Ebene, auf welcher die Schiffslängsachse senkrecht steht.

Beim weiteren Ausführungsbeispiel nach Fig. 17 bis 19 erfolgt der Antrieb des Schiffes über zwei getrennte Antriebseinheiten 7, die in zwei Gehäusen mit je einer Propulsion 9 untergebracht sind. Beide Schwingen 8 sind so positioniert, daß ein Schiffsbetrieb in Flachwasser gewährleistet ist. Auch hier wird das Heck charakterisiert durch die senkrechte Heckabschlußplatte.

Die Fig. 20-26 zeigen zwei völlig anders gestaltete Schiffsrümpfe. Der Schiffskörper 1 ist mit fest eingebauten Propulsionseinheiten 9 ausgerüstet. Die Antriebseinheiten 9 befinden sich in einer Art Ausnehmung 20 des Vorderschiffes 3 unterhalb des Oberwasserschiffes 10 und seitlich des Unterwasserschiffes 11. Diese Anordnung geht besonders deutlich aus den Fig. 21, 24 und 26 hervor. Die Fig. 21 und 22 zeigen, daß die Propulsionseinheiten 9 sich vor dem Rumpfschatten befinden und darum direkt angeströmt werden. Vorzugsweise werden die Propulsionseinheiten 9 in der ersten Hälfte des keilförmigen Buges 2 oder des Vorderschiffes 3 angeordnet.

Die Fig. 23-26 zeigen eine Kombination der Rümpfe der Fig. 14-17 und der Fig. 20-22. Es ist ersichtlich, daß sich alle Propulsionseinheiten 9 außerhalb des Rumpfschattens befinden beziehungsweise befinden können. Nach Fig. 26 geht die Anordnung der Antriebseinheiten 9 in den Ausnehmungen 20 des Vorderschiffes hervor.

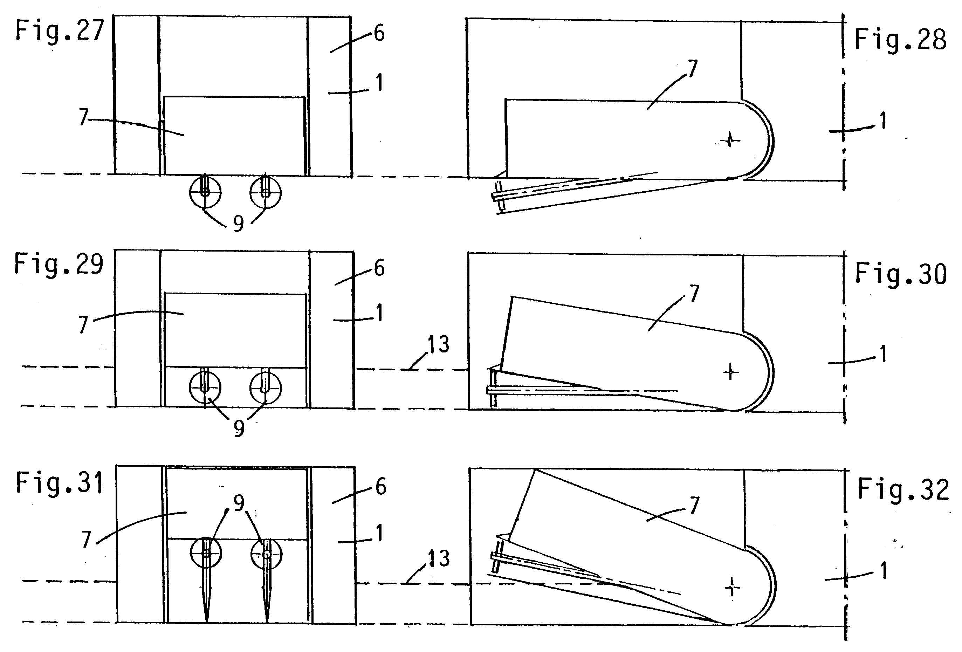

Die Fig. 27-32 zeigen die verschiedenen Stellungen der Propulsion 9 in den Heckansichten und in den Seitenansichten. Dabei stellen die Fig. 27 und 28 die wichtigsten Positionen dar, nämlich daß sich die Propulsion 9 unterhalb des Rumpfschattens befindet und dabei direkt angeströmt wird. Sie eignet sich in dieser Position für hohe Schiffsgeschwindigkeiten. Fig. 29 und 30 stellen die Lage der Antriebsschwinge 7 dar, die nur im Flachwasser, d.h. zum Beispiel in Häfen, bei langsamer Fahrt angewendet wird. In Fig. 31 und 32 ist die obere Stellung der Propulsion 9 dargestellt. Hierbei befindet sich die Propulsion 9 oberhalb der Wasserlinie 13. Diese Position zeigt die Möglichkeit der Inspektion und der Wartung beziehungsweise der Reparatur. Auch ist in dieser Position bei einem Ausfall der Propulsion 9 keine nachteilige Beeinflussung der verbleibenden funktionsfähigen Einheiten gegeben. Weiterhin kann diese Position bei der Verwendung von Segeln als Antrieb eingesetzt werden.

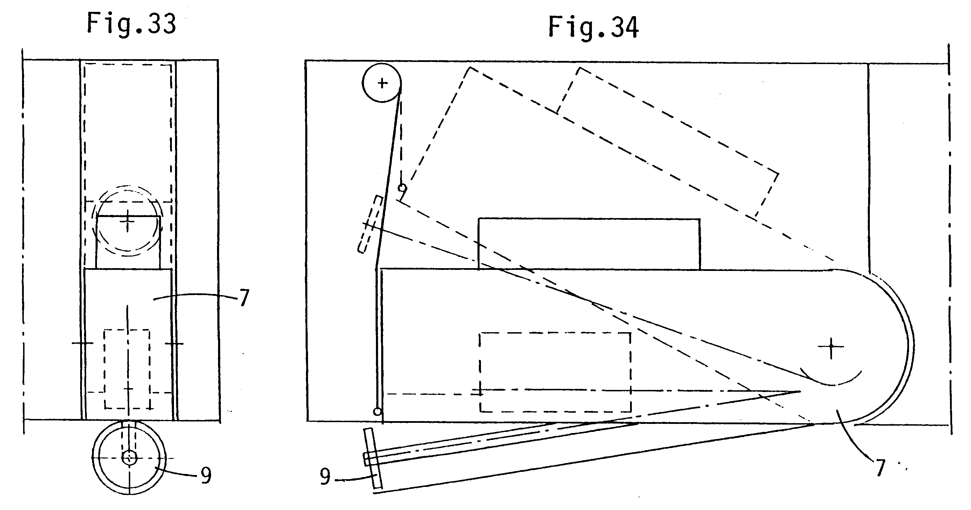

Fig. 33 zeigt die Heckansicht und Fig. 34 die Seitenansicht des Antriebsgehäuses aus den Fig. 17 und 19 im Schnitt mit dem eingebauten Antriebsaggregat 7 und der dazugehörigen Propulsion 9. Aus Fig. 34 ist ersichtlich, daß die gesamte Einheit über eine Verstellung, z.B. eine Seilwinde, stufenlos in die für den jeweiligen Zweck erforderliche Höhe eingestellt werden kann. Über ein entsprechendes Gestänge beziehungsweise einen Klemmzylinder läßt sich die Antriebsschwinge in jeder Position arretieren. Durch das Anpassen des Schiffskörpers 1 im hinteren unteren Bereich an den Radius der Schwinge ist eine widerstandsfreie Strömung des unter dem Schiff befindlichen Wassers problemlos gewährleistet.

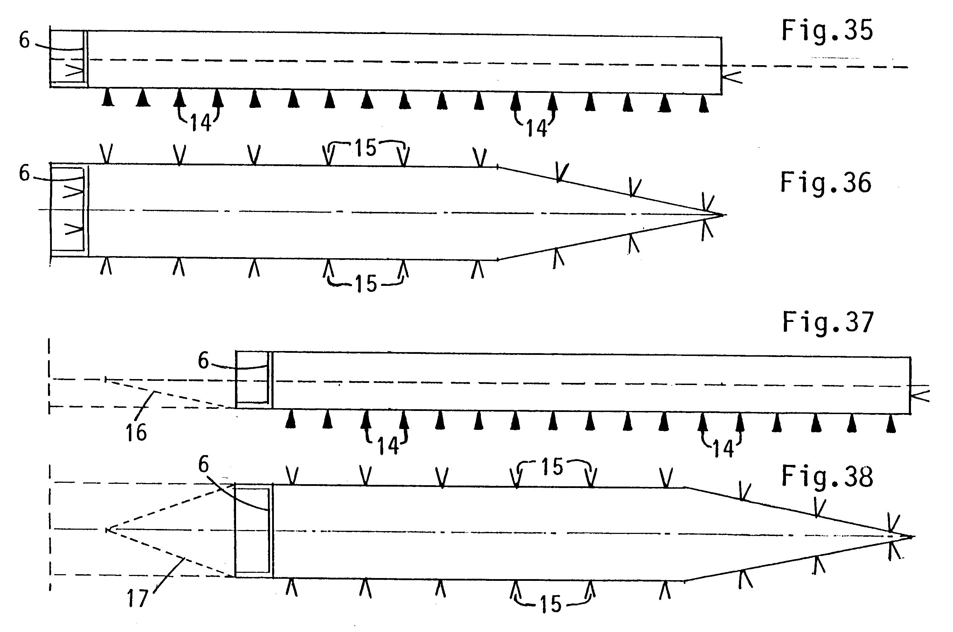

Die Fig. 35-38 zeigen qualitativ in schematischen Darstellungen den Aufbau des Auftriebes 14 und des Seitendruckes 15 eines Schiffes mit einer senkrechten Heckabschlußplatte in der Ruhe und in der Bewegung. Fig. 35 gibt ein Schiff in Seitenansicht in der Ruhe wieder. Die voll gezeichneten Pfeile stellen die Auftriebskräfte dar. Fig. 36 zeigt das gleiche Schiff in der Draufsicht. Die dort verwendeten Pfeile 15 stellen die auf die Außenwände wirkenden Wasserkräfte dar. In Fig. 37 ist das gleiche Schiff wie in Fig. 35 dargestellt, aber mit einer Geschwindigkeit von ca. 10-20 km/h, entsprechend ca. 3-6 m/s. Die gestrichelte schräge Linie 16 hinter dem Heck stellt das aufsteigende Wasser der Auftriebskräfte aus Fig. 35 dar. Fig. 38 zeigt das gleiche Schiff wie Fig. 36, aber mit einer Geschwindigkeit von ca. 10-20 km/h, entsprechend ca. 3-6 m/s. Die beiden gestrichelten schrägen Linien 17 hinter dem Heck 6 stellen die Flächen des zusammenströmenden Wassers dar, hervorgerufen durch die verfahrenen Außenwände.

Um das Verhalten des Wassers bei Fahrt eines Schiffes mit senkrechter Heckabschlußplatte verständlich darzustellen, dienen die Fig. 39 und 40.

Fig. 39 zeigt das Verhalten des Wassers, das sich unter dem Schiffskörper 1 befindet. Es bildet die ansteigende Fläche 16. Durch die Schiffsbewegung werden die Auftriebskräfte am Heck des Schiffes frei. Stellt man sich die Seitenwände theoretisch verlängert vor, so bildet sich für diese Phase des Bewegungsablaufes die Wasseroberfläche so aus, wie es in Fig. 39 skizziert ist.

Fig. 40 zeigt das Verhalten des umgebenden Wassers bei einem theoretisch verlängerten Schiffsboden. Beim Verfahren der Schiffsseitenwände stellt sich eine Wasseroberfläche ein, wie in Fig. 40 angedeutet. Entsprechend den senkrechten Flächen 17 fließt das Wasser hinter dem Heck zusammen. Die Kombination der Wasseroberflächen aus den Fig. 39 und 40 gibt in etwa die Ausbildung der Wasseroberfläche am Heck eines Schiffes wieder, wie in Fig. 38 dargestellt, d.h., es wird eine dreieckige pyramidenförmige Mulde gebildet, in welche die hinter dem Schiffsrumpf mitgeführte Luft einfallen kann. An keinem Punkt des Bewegungsablaufes ist ein Nachlassen oder Ausbleiben der Auftriebskräfte zu beobachten. Über die Wände 17 stürzt das Wasser von den Seiten von oben in den von den Flächen 16 und 17 gebildeten Freiraum 18 hinein.

## Patentansprüche

1. Verdrängungs-Schiff mit nur einem Rumpf, **dadurch gekennzeichnet**, daß das Heck (6) zumindest im Bereich des Unterwasserschiffes eine ebene Fläche bildet zu der die Schiffslängsachse eine Normale ist und daß der Rumpf zumindest im Bereich des Unterwasserschiffes mindestens ab Schiffsmitte zum Heck (6) hin eine gleichbleibenden Querschnittbesitzt und
- daß die beiden Seitenwände (1a, 1b) und der Boden (1c) des Schiffes über die Heckfläche (6) hinaus in Verlängerung des Rumpfes nach hinten überstehen.

2. Schiff nach Anspruch 1, **dadurch gekennzeichnet**, daß die Seitenwände (1a, 1b) weiter über die Heckfläche (6) hinausragen als der Boden (1c).

3. Schiff nach Anspruch 2 oder 3, **dadurch gekennzeichnet**, daß der oder die Antriebspropeller (9) in Schiffslängsrichtung gesehen außerhalb des größten Querschnittes des Schiffsrumpfes liegen.

4. Schiff nach Anspruch 3, **dadurch gekennzeichnet**, daß sich das Unterwasserschiff aus einer oder mehreren längs durchlaufenden geradflächigen Stufen (20) mit unterschiedlich großen Keilwinkeln zusammensetzt.

5. Schiff nach Anspruch 4, **dadurch gekennzeichnet**, daß die Propeller (9) in den Ausnehmungen der Stufen (20) vorne, mittschiffs oder hinten am Schiff installiert sind.

6. Schiff nach einem der Ansprüche 3 bis 5, **dadurch gekennzeichnet**, daß die Propeller (9) an einem schwenkbaren Gehäuse (8) installiert sind.

7. Schiff nach Anspruch 6, **dadurch gekennzeichnet**, daß im Gehäuse (8) die Motoren einschließlich der Hilfsaggregate untergebracht sind.

8. Schiff nach Anspruch 6 oder 7, **dadurch gekennzeichnet**, daß für Wartung und Reparatur das Gehäuse (8) um einen Schwenkpunkt so nach oben drehbar ist, daß sich die Propeller oberhalb des Wasserspiegels befinden.

9. Schiff nach Anspruch 6, 7 oder 8, **dadurch gekennzeichnet**, daß für kleinere Schiffe durch entsprechende Einstellung des Antriebsgehäuses das Schiff trimmbar ist.

10. Schiff nach einem der vorherigen Ansprüche, **dadurch gekennzeichnet**, daß die Antriebseinheit(en) (9) in der ersten Hälfte des Schiffes angeordnet sind.

11. Schiff nach Anspruch 10, **dadurch gekennzeichnet**, daß die Antriebseinheiten zu den vorderen, auseinanderstrebenden Seiten parallel angeordnet sind.

12. Schiff nach Anspruch 11, **dadurch gekennzeichnet**, daß die Antriebseinheiten (9) nach oben durch eine Auskragung des Oberschiffes begrenzt sind.

13. Schiff nach einem der vorherigen Ansprüche, **dadurch gekennzeichnet**, daß statt eines herkömmlichen Propellers eine Turbine als Propulsion verwendet wird.

## Claims

1. A displacement ship having only one hull, characterized in that at least in the zone of the underwater hull the stern (6) forms a flat surface to which the ship's longitudinal axis is a normal; the hull has at least in the zone of its underwater part a constant cross-section at least from amidships in the direction of the stern (6), and
the two side walls (1a, 1b) and the bottom (1c) of the ship project backwardly beyond the stern surface (6) in prolongation of the hull.

2. A ship according to claim 1, characterized in that the side walls (1a, 1b) extend further beyond the stern surface (6) than the ship's bottom (1c).

3. A ship according to claims 2 or 3, characterized in that viewed outside the largest cross-section of the hull, the or each ship's propeller (9) is disposed in the longitudinal direction of the ship.

4. A ship according to claim 3, characterized in that the underwater hull is made up of one or more continuously longitudinally extending straight-surfaced steps (20) with different edge angle values.

5. A ship according to claim 4, characterized in that the propellers (9) are installed in the recesses of the steps (20) in the forward, amidships or after parts of the ship.

6. A ship according to claims 3 to 5, characterized in that the propellers are installed on a pivotable casing (8).

7. A ship according to claim 6, characterized in that the engines, including the ancillary units, are accommodated in the casing (8).

8. A ship according to claims 6 or 7, characterized in that for purposes of maintenance and repairs, the casing (8) can be so rotated upwards around the pivot that the propellers are disposed above the surface of the water.

9. A ship according to claims 6, 7 or 8, characterized in that in the case of smaller ships, the vessel can be trimmed by a suitable adjustment of the drive casing.

10. A ship according to one of the preceding claims, characterized in that the or each driving unit (9) is disposed in the first half of the ship.

11. A ship according to claim 10, characterized in that the driving units are disposed parallel with the forward, diverging sides.

12. A ship according to claim 11, characterized in that the driving units (9) are bounded in the upward direction by a projection of the upper part of the ship.

13. A ship according to one of the preceding claims, characterized in that the turbine is used for propulsion instead of a conventional propeller.

## Revendications

1. Bateau de déplacement monocoque,
caractérisé en ce que la poupe (6) forme, au moins dans la zone de la carène, une surface plane à laquelle l'axe longitudinal du bateau est une normale et que la coque, au moins dans la zone de la carène au moins à partir du milieu du bateau, possède une section transversale restant constante en direction de la poupe (6) et
- que les deux parois latérales (1a, 1b) et le fond (1c) du bateau font saillie au-dessus de la surface de la poupe (6) vers l'extérieur dans le prolongement de la coque vers l'arrière.

2. Bateau selon la revendication 1,
caractérisé en ce que les parois latérales (1a, 1b) font saillie au-dessus de la surface de la poupe (6) plus loin que le fond (1c).

3. Bateau selon la revendication 1 ou 2,
caractérisé en ce que la ou les hélices propulsives (9) se trouvent, vu en direction longitudinale du bateau, en dehors de la plus grande section transversale de la coque du bateau.

4. Bateau selon la revendication 3,
caractérisé en ce que la carène est constituée d'un ou plusieurs gradins à surface droite (20) s'étendant longitudinalement avec des angles de coin de grandeurs différentes.

5. Bateau selon la revendication 4,
caractérisé en ce que les hélices (9) sont installées dans les évidements des gradins (20) à l'avant, au milieu du bateau ou à l'arrière sur le bateau.

6. Bateau selon l'une des revendications 3 à 5,
caractérisé en ce que les hélices (9) sont installées sur un carter pivotant (8).

7. Bateau selon la revendication 6,
caractérisé en ce que les moteurs, y compris les ensembles auxiliaires, sont disposés dans le carter (8).

8. Bateau selon la revendication 6 ou 7,
caractérisé en ce que, pour l'entretien et la réparation, le carter (8) est pivotant vers le haut autour d'un point de pivotement de telle manière que les hélices se trouvent au-dessus du niveau de l'eau.

9. Bateau selon la revendication 6, 7 ou 8,
caractérisé en ce que, pour des bateaux plus petits, le bateau peut être arrimé par réglage correspondant du carter d'entraînement.

10. Bateau selon l'une des revendications précédentes,
caractérisé en ce que la ou les unités motrices (9) sont disposées dans la première moitié du bateau.

11. Bateau selon la revendication 10,
caractérisé en ce que les unités motrices sont disposées parallèles aux cotés antérieurs s'écartant l'un de l'autre.

12. Bateau selon la revendication 11,
caractérisé en ce que les unités motrices (9) sont limitées vers le haut par un porte-à-faux de l'accastillage.

13. Bateau selon l'une des revendications précédentes,
caractérisé en ce qu'on utilise, au lieu d'une hélice traditionnelle, une turbine comme propulsion.
